# FASCICULE DE BREVET EUROPEEN

(11) **EP 1 001 848 B1**
(45) Date de publication et mention de la délivrance du brevet: **02.05.2002**
(21) Numéro de dépôt: 98941558.3
(22) Date de dépôt: 06.08.1998
(51) Int. Cl.: B05C 1/08, B32B 15/08, B32B 31/30

(54) **PROCEDE ET DISPOSITIF DE REVETEMENT EN CONTINU D'AU MOINS UNE BANDE METALLIQUE PAR UN FILM EN POLYMERE RETICULABLE FLUIDE**
VERFAHREN UND VORRICHTUNG ZUM KONTINUIERLICHEN BESCHICHTEN EINES METALLBANDES MIT EINEM FILM AUS VERNETZBAREM FLIESSFÄHIGEM POLYMER
METHOD AND DEVICE FOR CONTINUOUS COATING OF AT LEAST ONE METAL STRIP WITH A FLUID CROSS-LINKABLE POLYMER FILM

(30) Priorité: 08.08.1997 FR 9710232
(43) Date de publication de la demande: 24.05.2000
(73) Titulaire: SOLLAC, 92800 Puteaux (FR)
(72) Inventeur: BONNEBAT, Claude, F-77340 Pontault Combault (FR); BRUN, Olivier, F-93120 La Courneuve (FR); SOAS, Thierry, F-60500 Chantilly (FR)
(74) Mandataire: Lanceplaine, Jean-Claude
(86) Numéro de dépôt international: FR9801759
(87) Numéro de publication internationale: WO9907480

(56) Documents cités:
- EP-A- 0 226 923
- EP-A- 0 326 919
- EP-A- 0 538 869
- DE-A- 19 534 704
- DE-A- 19 542 097
- FR-A- 2 261 073
- US-A- 4 990 364
- PATENT ABSTRACTS OF JAPAN vol. 012, no. 455 (C-548), 29 novembre 1988 & JP 63 182061 A (KAWASAKI STEEL CORP), 27 juillet 1988 & JP 63 182061 A (KAWASAKI)
- PATENT ABSTRACTS OF JAPAN vol. 017, no. 217 (M-1403), 28 avril 1993 & JP 04 353442 A (NIPPON STEEL CORP), 8 décembre 1992
- PATENT ABSTRACTS OF JAPAN vol. 004, no. 022 (C-074), 23 février 1980 & JP 54 158448 A (ASAHI CHEM IND CO LTD), 14 décembre 1979

## Description

La présente invention a pour objet un procédé et un dispositif de revêtement en continu d'au moins une bande métallique par un film fluide et de faible épaisseur en polymère réticulable exempt de solvant ou de diluant.

On connaît des polymères qui sont réticulables par voie thermique, comme par exemple les polymères thermodurcissables, ou par voie physique, comme par exemple les polymères photopolymérisables.

On connaît divers procédés d'application d'un revêtement organique thermoplastique ou thermodurcissable sur une bande métallique nue ou revêtue.

L'application des revêtements organiques comme par exemple des peintures ou des vernis liquides s'effectue le plus souvent par enduction au rouleau de ces revêtements liquides à l'état de solution ou de dispersion en milieu solvant ou aqueux.

Pour cela, on réalise le dépôt du revêtement liquide sur une bande métallique en effectuant un prédosage de la solution ou de la dispersion grâce à un système à deux ou trois rouleaux et en transférant une partie ou la totalité de ce revêtement liquide ainsi prédosé sur un rouleau applicateur en contact avec la surface de la bande métallique à revêtir.

Le transfert est réalisé soit par friction du rouleau applicateur et de la bande métallique, le défilement des deux surfaces en contact s'effectuant en sens contraire ou soit par contact dans le même sens.

Une évolution intéressante de la technologie d'application en continu des revêtements en polymère réticulable, comme par exemple des peintures ou des vernis thermodurcissables, sur une bande métallique consiste à effectuer le dépôt de ce revêtement sans faire intervenir de solvant ou de diluant.

Pour l'application de tels revêtements, plusieurs techniques sont connues jusqu'à présent.

La première consiste à effectuer l'application du revêtement organique sous la forme d'une poudre.

On connaît également une autre technique d'application d'un revêtement liquide sur une bande métallique qui utilise un réservoir chauffant couramment appelé fondoir, muni à sa partie inférieure d'un orifice d'écoulement du polymère liquide contenu dans le réservoir.

Au-dessous de ce réservoir sont disposés deux cylindres parallèles et en contact l'un avec l'autre et la bande métallique à revêtir se déplace au-dessous de ces cylindres.

Le polymère liquide est déversé au niveau de l'entrefer des cylindres, puis s'écoule entre lesdits cylindres et est déposé sur la bande métallique.

Mais, cette technique présente des inconvénients qui résident dans le fait que le polymère ne peut être que peu réactif compte tenu de son temps relativement long de stockage dans le réservoir chauffant et dans le fait qu'elle ne permet pas de maîtriser l'épaisseur du film de revêtement sur la bande métallique et par conséquent d'obtenir un revêtement homogène et de faible épaisseur.

Une autre technique consiste à utiliser l'extrusion du revêtement organique à l'état fluide et à appliquer ce revêtement sur un substrat par couchage ou par lamination.

L'extrusion couchage d'un revêtement organique mince est pratiquée de façon courante en particulier avec des polymères thermoplastiques sur des supports souples, comme le papier, les films plastiques, les textiles, voire des supports métalliques minces, comme des materiaux d'emballage.

Le transfert du revêtement fondu est réalisé au moyen d'une filière plate rigide positionnée au contact direct du substrat et l'épaisseur de ce revêtement ne dépend pas de l'ouverture de la filière, mais seulement du débit de matière fondue au travers de la section de ladite filière et de la vitesse du substrat.

Cette technique exige un parallélisme parfait entre les bords de la filière et le substrat.

De plus, la pression exercée par la filière sur le substrat ne provient que de la viscosité de la matière fondue de sorte que les possibilités de correction des défauts de planéité du substrat par plaquage de celui-ci sur le cylindre d'appui sont très limitées.

La technique de l'extrusion lamination d'une couche uniforme de revêtement fluide sur un substrat utilise l'étirage sous filière d'une nappe fluide à la sortie d'une filière plate, cette nappe étant ensuite plaquée sur le substrat à l'aide par exemple d'un rouleau froid, d'une barre rotative ou encore par une lame d'air ou un champ électrostatique.

Dans ce cas, l'épaisseur de la nappe fluide est contrôlée par le débit de la matière dans la section de la filière et par la vitesse du substrat.

Pour éviter le collage de la nappe fluide sur le rouleau de plaquage, celui-ci doit présenter une surface parfaitement lisse et refroidie.

De plus, la pression de plaquage doit cependant être suffisamment faible pour éviter la formation d'un bourrelet de calandrage et, de ce fait ce mode de transfert ne permet pas de compenser les variations éventuelles d'épaisseur et des défauts de planéité dans le cas d'un substrat rigide.

Cette technique d'application du revêtement avec formation d'un brin libre à la sortie de la filière d'extrusion permet d'éviter les problèmes de couplage entre la filière et le substrat rigide, mais elle induit des instabilités d'application si la longueur du brin libre fluctue.

D'une manière générale, dans les différentes techniques connues et énumérées ci-dessus, l'application en continu d'un revêtement organique mince sur des substrats métalliques s'effectue sous des pressions de contact faibles, insuffisantes pour permettre de réaliser un revêtement mince, uniforme et appliqué de manière homogène sur des substrats rigides qui peuvent présenter des défauts de planéité et d'hétérogénéité d'épaisseur.

Ces différentes techniques d'application ne permettent pas de compenser les variations d'épaisseur du substrat métallique, qui induisent de ce fait des fluctuations inacceptables d'épaisseur du revêtement notamment dans le cas où le substrat est formé par une bande métallique qui présente une rugosité et/ou des ondulations de surface importantes d'amplitude égale ou supérieure à l'épaisseur du revêtement à réaliser sur ladite bande métallique.

D'autre part, ces différentes techniques d'application ne permettent pas de s'accommoder des variations de largeur du substrat, ni des variations de positionnement transversal de ce substrat de sorte que le revêtement ne peut pas être déposé de manière uniforme sur toute la largeur dudit substrat.

Enfin, lors de l'application du revêtement, des micro-bulles d'air peuvent s'intercaler entre le revêtement et le substrat ce qui nuit à l'application homogène et à l'aspect de surface de ce revêtement et dans certaines applications entraîne une corrosion rapide du substrat au niveau de ces micro-bulles d'air.

Par ailleurs, on connaît dans le EP-A-0 593 708 un dispositif de revêtement d'une bande métallique en défilement dans lequel cette bande métallique passe sur un cylindre d'appui et est en contact avec un cylindre applicateur à la surface duquel est déposé un agent. de revêtement fluide.

Le cylindre applicateur est entraîné en rotation dans un sens opposé à la direction de défilement de la bande et ce cylindre est en métal.

Ce dispositif présente des inconvénients.

En effet, compte tenu de la nature du matériau constituant le cylindre applicateur, ce dispositif ne permet pas d'appliquer une pression homogène au niveau de tous les points d'application du film sur la bande métallique entre les deux rouleaux, lorsque la surface de cette bande métallique présente trop de reliefs, c'est à dire une rugosité et/ou des ondulations équivalentes ou supérieures à l'épaisseur du film de revêtement à déposer.

En effet, la dureté de surface du rouleau applicateur ne permet pas d'appliquer et de répartir uniformément et localement la pression sur la bande et il risque même de se produire un étalement du film de revêtement au dépens de l'homogénéité de son épaisseur.

On connaît également dans le EP-A-0538 869 une installation d'application d'un revêtement en continu sur une feuille métallique. Cette installation comprend un cylindre support de la feuille métallique, un cylindre applicateur de surface déformable et un cylindre preneur de la peinture dans un réservoir. La feuille métallique défile entre le cylindre support et le cylindre applicateur qui est lui-même comprimé entre le cylindre support et le cylindre preneur. Les trois cylindres sont entraînés en rotation dans le même sens.

L'application en continu d'un revêtement en polymère réticulable de faible épaisseur et uniforme sur une bande métallique pose donc des problèmes du fait que cette bande métallique présente des défauts de planéité et d'épaisseur ainsi qu'une rugosité et/ou des ondulations importantes d'amplitude égale ou supérieure à l'épaisseur du film de revêtement à déposer sur ladite bande même lorsque cette bande est plaquée sous une tension élevée sur un cylindre uniforme.

L'invention a pour but de proposer un procédé et un dispositif de revêtement en continu d'au moins une bande métallique par un film fluide et de faible épaisseur en polymère réticulable exempt de solvant ou de diluant permettant d'obtenir un revêtement d'épaisseur uniforme de quelques microns appliqué d'une manière homogène sur cette bande, tout en évitant que des micro-bulles d'air s'intercalent entre le film et la bande métallique et en s'affranchissant des défauts de planéité et de rugosité de cette bande ainsi qu'en permettant une application sur une partie partie ou la totalité du revêtement et cela malgré les fluctuations de largeur et de positionnement transversal de cette bande.

L'invention a donc pour objet un procédé de revêtement en continu d'au moins une bande métallique par un film fluide en polymère réticulable exempt de solvant ou de diluant et d'épaisseur inférieure à celle de la bande métallique, procédé par lequel:
- on fait défiler en continu la bande métallique sur au moins un cylindre de support,
- on préchauffe ladite bande métallique à une température sensiblement égale ou supérieure à la température du film fluide en polymère réticulable et à la température de ramollissement de ce polymère réticulable,
- on forme par écoulement forcé, sur un cylindre preneur de surface dure, une nappe homogène et d'épaisseur uniforme dudit polymère réticulable possédant une viscosité supérieure à 10Pa.s dans les conditions de formation de ladite nappe, ledit cylindre preneur étant chauffé à une température sensiblement égale ou supérieure à la température de ladite nappe et à la température de ramollissement de ce polymère réticulable et entraîné en rotation dans le même sens que le cylindre de support de la bande métallique et on forme le film en polymère réticulable à une épaisseur uniforme sensiblement égale à l'épaisseur désirée,
- on comprime, entre le cylindre preneur et la bande métallique, un élément applicateur de surface déformable, chauffé à une température sensiblement égale ou supérieure à la température du cylindre preneur et entraîné en rotation dans le même sens que le cylindre de support de la bande métallique pour transférer ce film, d'une part, du cylindre preneur sur l'élément applicateur et, d'autre part, dudit élément applicateur sur la bande métallique et obtenir un revêtement d'épaisseur homogène.

L'invention a également pour objet un dispositif de revêtement en continu d'au moins une bande métallique par un film fluide et de faible épaisseur en polymère réticulable exempt de solvant ou de diluant et d'épaisseur inférieure à celle de la bande métallique, ledit dispositif comprenant :
- des moyens d'entraînement en continu de la bande métallique,
- au moins un cylindre de support de la bande métallique,
- des moyens de préchauffage de la bande métallique à une température égale ou supérieure à la température du film fluide en polymère réticulable et à la température de ramollissement de ce polymère réticulable
- des moyens de formation, sur un cylindre preneur de surface dure, par écoulement forcé d'une nappe homogène et d'épaisseur uniforme dudit polymère réticulable possédant une viscosité supérieure à 10 Pa.s dans les conditions de formation de ladite nappe, ledit cylindre preneur formant le film en polymère réticulable à une épaisseur uniforme sensiblement égale à l'épaisseur désirée et étant chauffé à une température sensiblement égale ou supérieure à la température de ladite nappe et à la température de ramollissement de ce polymère réticulable et entraîné en rotation dans le même sens que le cylindre de support de la bande métallique,
- et un élément applicateur de surface déformable comprimé entre le cylindre repreneur et la bande métallique, chauffé à une température sensiblement égale ou supérieure à la température du cylindre preneur et entraîné en rotation dans le même sens que le cylindre de support de la bande métallique pour transférer ledit film, d'une part, du cylindre preneur sur cet élément applicateur et, d'autre part, dudit élément applicateur sur la bande métallique et obtenir un revêtement d'épaisseur homogène.

Les caractéristiques et avantages de l'invention apparaîtront au cours de la description qui va suivre, donnée uniquement à titre d'exemple et faite en référence aux dessins annexés, sur lesquels :
- La fig. 1 est une vue schématique en élévation d'une installation de revêtement d'une bande métallique par un film en polymère réticulabie comportant un dispositif d'application de ce revêtement, conforme à l'invention,
- la Fig. 2 est une vue schématique en perspective du dispositif d'application, conforme à l'invention,
- la Fig. 3 est une vue schématique en élévation des moyens d'enlèvement de l'excès de polymère réticulable déposé sur le cylindre preneur du dispositif d'application, conforme à l'invention,
- la Fig. 4 est une vue schématique en élévation des moyens d'enlèvement de l'excès de polymère réticulable déposé sur l'élément applicateur du dispositif d'application, conforme à l'invention.

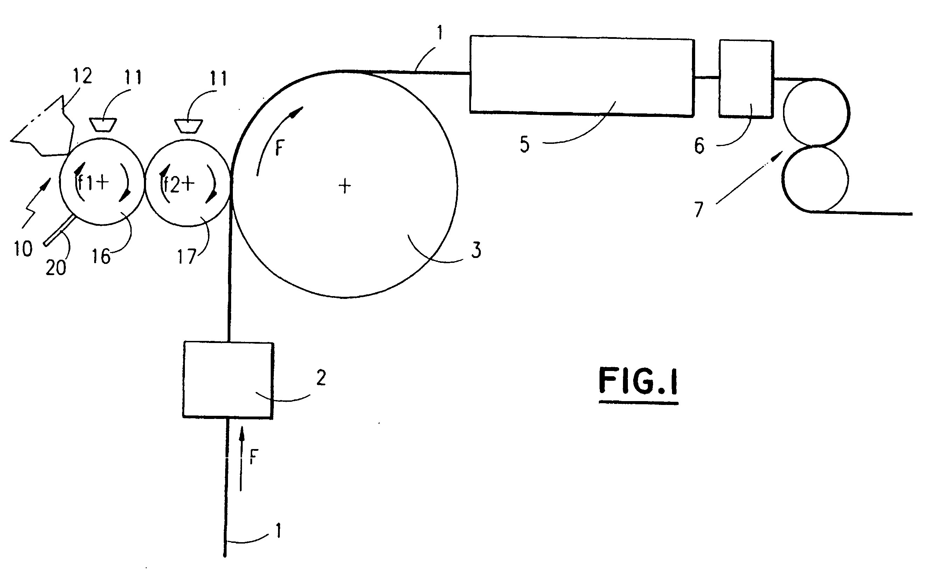

Sur la Fig. 1, on a représenté schématiquement une installation de revêtement en continu d'une bande métallique 1 par un film en polymère réticulable fluide exempt de solvant ou de diluant et d'épaisseur comprise par exemple entre 5 et 50 microns.

Cette bande métallique a une épaisseur comprise par exemple entre 0,10 et 4mm et est par exemple en acier ou en aluminium ou encore en alliage d'aluminium et peut être revêtue ou prépeinte sur l'une ou sur ses deux faces.

Le polymère utilisé pour revêtir la bande métallique 1 est un polymère exempt de solvant ou de diluant et réticulable par voie thermique comme par exemple un polymère thermodurcissable ou par voie physique comme par exemple un polymère photopolymérisable.

Ces polymères ont des températures de début d'écoulement, de ramollissement, de début de réticulation et de réticulation rapide qui sont différentes.

Dans l'exemple de l'installation représentée à la Fig.1, la bande métallique 1 est entraînée en défilement selon la flèche F et cette bande métallique 1 est en appui sur au moins un cylindre de support 3 par exemple en acier.

L'installation comporte des moyens 2 de préchauffage de la bande métallique 1 à une température sensiblement égale ou supérieure à la température du film fluide en polymère réticulable à déposer sur ladite bande métallique 1 et à la température de ramollissement de ce polymère réticulable.

Ces moyens 2 de chauffage de la bande métallique 1 sont constitués par exemple par au moins un four à induction.

Ainsi que représenté à la Fig. 1, l'installation comporte également, de l'amont à l'aval :
- un dispositif désigné dans son ensemble par la référence 10 de revétement de la bande métallique 1 par un film en polymère réticulable fluide, exempt de solvant ou de diluant.
- des moyens 5 de cuisson ou de réticulation du film en polymère réticulable,
- et un bloc 7 de traction de la bande métallique.

Dans le cas où le polymère est réticulable par voie thermique, les moyens 5 de cuisson comprennent par exemple au moins un four à induction et des moyens 6 de refroidissement et dans le cas où le polymère est réticulable par voie physique, les moyens 5 de cuisson peuvent être constitués par des lampes à rayons ultraviolets ou par des faisceaux d'électrons.

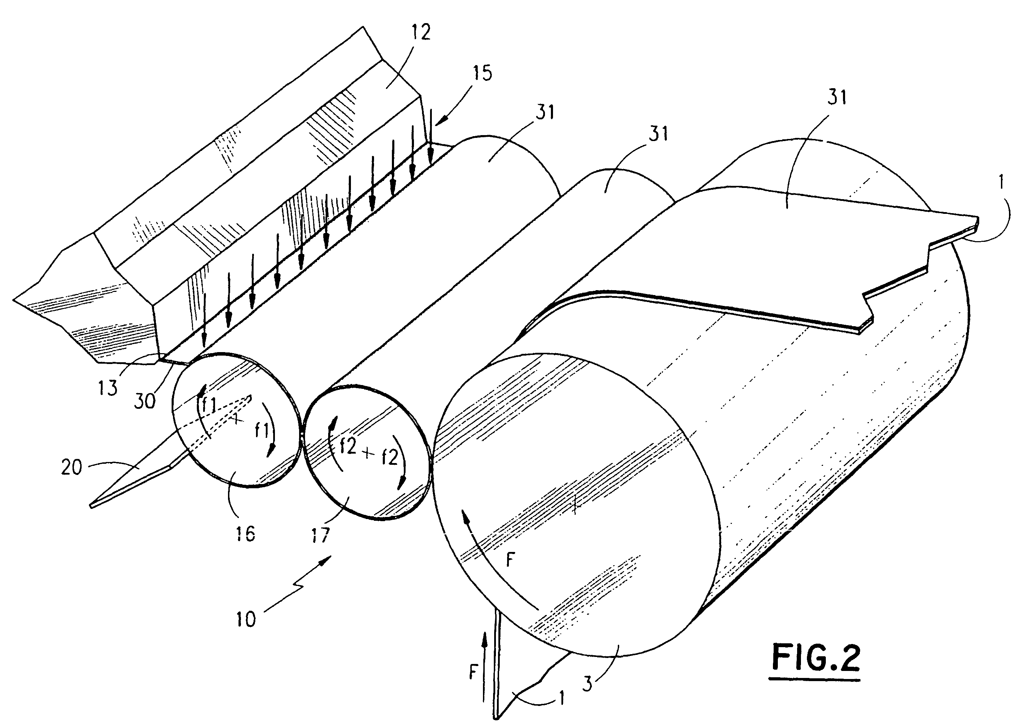

En se reportant maintenant à la Fig. 2, on va décrire le dispositif 10 de revêtement de la bande métallique 1 par un film en polymère réticulable fluide.

Ce film en polymère réticulable à déposer sur la bande métallique 1 doit être d'épaisseur uniforme, bien que cette bande métallique 1 présente des hétérogénéités d'épaisseur ou des défauts de planéité ainsi qu'une rugosité et/ou des ondulations de surface importantes d'amplitude égale ou supérieure à l'épaisseur du film déposé sur ladite bande métallique 1.

Selon un mode de réalisation représenté à la Fig. 2, le dispositif 10 de revêtement comporte :
- des moyens 12, 13 et 15 de formation, sur un cylindre preneur 16 de surface dure, par écoulement forcé d'une nappe 30 homogène et d'épaisseur uniforme en polymère réticulable possédant une viscosité supérieure à 10 Pa.s dans les conditions de formation de ladite nappe 30, ledit cylindre preneur 16 formant un film 31 en polymère réticulable à une épaisseur uniforme et sensiblement égale à l'épaisseur désirée,
- et un élément applicateur 17 en contact avec le cylindre preneur 16 et la bande métallique 1 et destiné à transférer ledit film 31, d'une part, du cylindre preneur 16 sur l'élément applicateur 17 et, d'autre part, dudit élément applicateur 17 sur cette bande métallique 1 afin d'obtenir un revêtement d'épaisseur homogène.

Les moyens de formation par écoulement forcé de la nappe 30 en polymère réticulable comprennent une machine d'extrusion non représentée, de type classique, munie d'une filière 12 comportant une fente d'extrusion 13 et un organe de régulation de débit, non représenté, constitué par exemple par une pompe doseuse et disposée entre la machine d'extrusion et la filière 12.

Le cylindre preneur 16 comporte une surface dure, usinée ou rectifiée et est positionné avec un très grande précision de manière à présenter une géométrie parfaitement uniforme et un parallélisme optimum par rapport à La fente d'extrusion 13 de la filière 12.

Ce cylindre preneur 16 a une surface métallique dure comme par exemple à base d'acier revêtu ou nu ou à base de matériau céramique.

Le cylindre preneur 16 est chauffé à une température sensiblement égale ou supérieure, d'une part, à la température de la nappe 30 et, d'autre part, à la température de ramollissement du polymère réticulable et est entraîné en rotation, par des moyens appropriés, non représentés, dans le même sens que le cylindre 3 de support de la bande métallique 1, comme représenté par les flèches f1 sur la Fig. 2.

La formation de la nappe 30 dudit polymère réticulable du cylindre preneur 16 est réalisée par exemple par extrusion couchage ou par extrusion lamination.

Dans le cas de l'extrusion couchage, les moyens de formation par écoulement forcé de la nappe 30 sont formés par la filière 12 en appui contre la surface du cylindre preneur 16 et munie de moyens de réglage, de type classique, de la position des bords de la bande d'extrusion 13 de ladite filière 12 par rapport à ladite surface du cylindre preneur 16.

Dans le cas de l'extrusion lamination, les moyens de formation par écoulement forcé de la nappe 13 sont formés par la filière 12, des moyens d'étirage de la nappe 30 par ajustement du débit de la filière 12 et/ou de la vitesse de rotation du cylindre preneur 16, des moyens de réglage, de type classique, de la position des bords de la fente d'extrusion 13 de ladite filière 12 par rapport à la surface du cylindre preneur 16 et par des moyens 15 de plaquage de la nappe 30 sur ladite surface du cylindre preneur 16.

Les moyens 15 de plaquage de la nappe 30 sur la surface du cylindre preneur 16 sont formés par une lame d'air dirigée vers le cylindre preneur 16 au niveau de la génératrice de contact de ladite nappe 30 sur ledit cylindre preneur 16 ou par des moyens de plaquage électrostatique.

Pour des moyens de plaquage électrostatique, le cylindre preneur 16 est obligatoirement en métal.

Dès le contact avec le cylindre preneur 16, le film 31 en polymère réticulable est à une épaisseur uniforme sensiblement égale à l'épaisseur désirée pour le revêtement sur la bande métallique 1.

La filière 12 de la machine d'extrusion 11 donne la répartition uniforme de la nappe 30 et de ce fait du film 31 et l'épaisseur de ce film 31 est obtenue en jouant sur la vitesse de rotation du cylindre preneur 16 et/ou de l'élément applicateur 17 et sur la vitesse de défilement de la bande métallique 1.

L'élément applicateur 17 comporte une surface déformable et est comprimé entre le cylindre preneur 16 et la bande métallique 1 en appui sur le cylindre de support 3.

Dans l'exemple de réalisation représenté sur les Fig. 1 et 2, l'élément applicateur 17 est formé par un cylindre revêtu d'un matériau déformable, comme par exemple de l'élastomère.

Selon une variante, l'élément applicateur est formé par une bande sans fin qui peut être revêtue d'un matériau déformable, comme par exemple de l'élastomère.

Dans ce qui suit, la description sera faite avec un élément applicateur constitué par un cylindre.

Le cylindre applicateur 17 chauffé à une température sensiblement égale ou supérieure à la température du cylindre preneur 16, est entraîné en rotation dans le même sens que le cylindre de support 3 de la bande métallique 1, comme représenté par les flèches f2 sur la Fig. 2.

Le chauffage du cylindre preneur 16 et du cylindre applicateur 17 est obtenu par exemple par au moins une source interne disposée dans chaque cylindre et constituée par une circulation d'un fluide, des résistances électriques, des lampes à infrarouge ou par au moins une source externe 11 disposée au niveau des zones de transfert et constituée par des générateurs d'air chaud ou des lampes à infrarouge.

De plus, le dispositif de revêtement 10 comprend des moyens non représentés, de type classique, de réglage des vitesses tangentielles du cylindre preneur 16 et du cylindre applicateur 17 dans un rapport compris entre 0,5 et 2 fois la vitesse de défilement de la bande métallique 1.

Les vitesses du cylindres preneur 16 et du cylindre applicateur 17 peuvent être réglées indépendamment l'une de l'autre.

Le dispositif de revêtement 10 comprend aussi des moyens non représentés de réglage de pression de contact, d'une part, entre le cylindre preneur 16 et le cylindre applicateur 17 et, d'autre part, entre le cylindre applicateur 17 et la bande métallique 1. Ces moyens sont constitués par exemple par des vérins hydrauliques ou des systèmes vis-crémaillères et permettent d'ajuster les pressions de contact en fonction de la viscosité du polymère réticulable de manière à assurer un transfert total de la matière et à minimiser les efforts de friction.

Le cylindre de support 3 de la bande métallique 1 est en acier ou en élastomère.

Ainsi que représenté à la Fig. 2, le cylindre preneur 16, le cylindre applicateur 17 et le cylindre de support 3 ont une longueur supérieure à la largeur de la bande métallique 1.

Selon une variante, le cylindre applicateur 17 peut avoir une longueur inférieure à la longueur du cylindre preneur 16.

L'application du film 31 fluide et de faible épaisseur en polymère réticulable par voie thermique ou par voie physique est réalisée, dans l'exemple de réalisation représenté sur les figures, de la façon suivante.

La bande métallique 1 est maintenue à une température égale ou supérieure à la température de ramollissement du polymère réticulable et les cylindres preneur 16 et applicateur 17 sont entraînés en rotation dans le même sens que le cylindre de support 3 de la bande métallique 1.

A la sortie de la filière 12 de la machine d'extrusion, la nappe 30 formée par écoulement forcé est plaquée sur le cylindre preneur 16 de façon à former le film 31 en polymère réticulable d'épaisseur uniforme correspondant sensiblement à l'épaisseur du revêtement à former sur la bande métallique 1.

Les températures des cylindres preneur 16 et/ou applicateur 17 sont ajustées pour optimiser la viscosité du polymère réticulable au cours de son transfert sur lesdits cylindres.

Du fait de la pression exercée par le cylindre preneur 16 et la bande métallique 1 sur le cylindre applicateur 17 de surface déformable, le film 31 est transféré du cylindre preneur 16 sur le cylindre applicateur 17 et de ce cylindre applicateur 17 sur la surface de la bande métallique 1 à revêtir.

Ensuite, la bande métallique 1 ainsi revêtue passe dans les moyens 4 de préchauffage, puis dans les moyens 5 de chauffage de façon à cuire le film 31 en polymère réticulable.

Ce film 31 en polymère réticulable peut être déposé sur une bande métallique nue en acier ou en aluminium ou en alliage d'aluminium ou sur une bande métallique prérevêtue ou prépeinte.

Le revêtement ainsi réalisé sur la bande métallique 1 a par exemple une épaisseur comprise entre 5 et 50 microns avec une uniformité d'épaisseur de quelques microns et cela malgré les défauts notables de planéité ou d'hétérogénéité d'épaisseur de la bande métallique 1.

D'autres moyens de formation par écoulement forcé de la nappe 30 peuvent également être utilisés.

Ainsi, les moyens de formation par écoulement forcé de la nappe 30 peuvent être formés par un bloc rigide en polymère réticulable appliqué sous pression contrôlée pour déposer des particules de polymère réticulable sur le cylindre preneur 16 et former la nappe 30 ou encore par un système de transfert sous un champ électrostatique d'une poudre en polymère réticulable sur ce cylindre preneur 16 pour former ladite nappe 30.

Selon d'autres variantes, les moyens de formation par écoulement forcé de la nappe 30 peuvent être formés par un système de projection de polymère réticulable fluide sur le cylindre preneur 16 ou par un système d'application sur ce cylindre preneur 16 d'une bande continue en polymère réticulable préalablement réalisée pour former la nappe 30.

Selon encore une autre variante, les moyens de formation par écoulement forcé de la nappe 30 peuvent être formés par une barre rotative disposée entre la filière 12 et ce cylindre preneur 16.

La nappe 30 et le film 31 en polymère réticulable peuvent avoir une largeur inférieure à largeur de la bande métallique 1 pour revêtir qu'une partie de cette bande métallique 1 ou une largeur supérieure à la largeur de cette bande métallique 1 pour revêtir la totalité de ladite bande métallique 1.

Dans le cas où la nappe 30 et le film 31 ont une largeur supérieure à la bande métallique 1, comme représentée à la Fig. 2, il subsiste, de part et d'autre de la zone utile d'application sur ladite bande métallique 1, une portion de polymère réticulable qui n'est pas appliquée sur cette bande métallique 1.

Cet excès de polymère réticulable doit être enlevé afin d'éviter qu'il crée une surépaisseur sur le cylindre applicateur 17 ou sur le cylindre preneur 16.

En effet, étant donné l'espace qu'il subsiste 'entre le cylindre applicateur 17 et le cylindre de support 3 de part et d'autre de la bande métallique 1 et du fait de l'épaisseur de cette bande métallique 1, l'excès de polymère réticulable reste sur le cylindre applicateur 17.

Pour enlever cet excès de matière, deux solutions sont envisageables.

La première solution consiste à équiper le cylindre preneur 16 de moyens d'enlèvement de l'excès de polymère réticulable.

Cet excès de matière qui n'a pas été déposé sur la bande métallique 1 reste sur le cylindre applicateur 17 et est transféré sur le cylindre preneur 16 du fait de la pression exercée sur la face déformable du cylindre applicateur 17.

Dans ce cas, les moyens d'enlèvement de l'excès de polymère réticulable déposé sur le cylindre meneur 16 sont formés par au moins une racle 20, par exemple métallique, en contact avec le cylindre preneur 16.

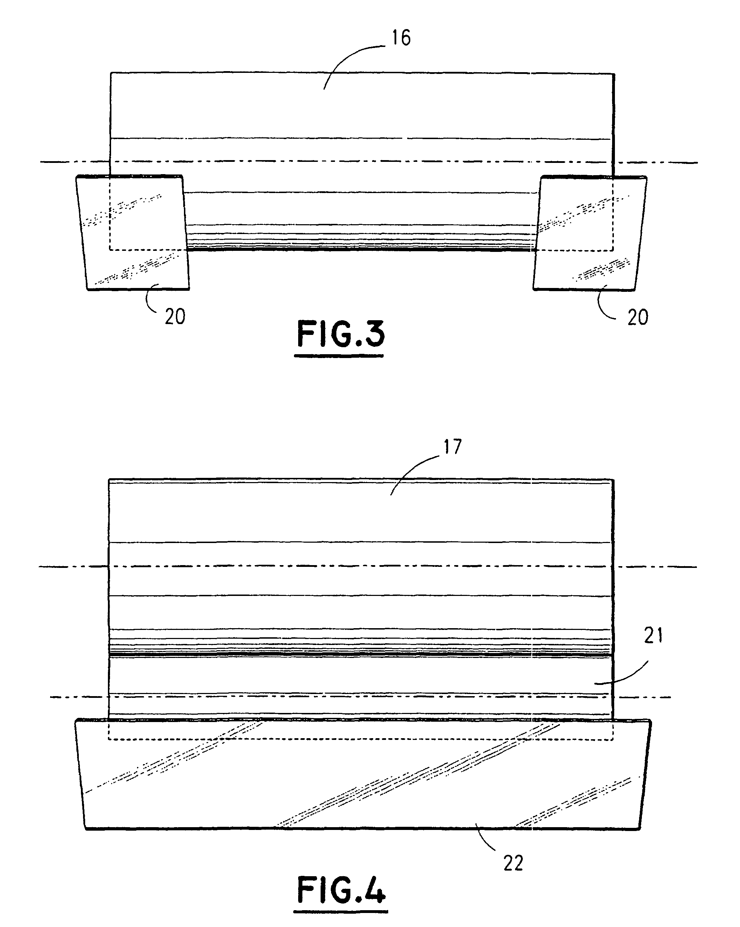

Selon un exemple de réalisation représenté à la Fig. 3, les moyens d'enlèvement de l'excès de polymère réticulable déposé sur le cylindre preneur 16 sont formés par deux racles 20, par exemple métalliques, en contact chacune avec un bord latérale du cylindre preneur 16 en amont de la génératrice d'application de la nappe 30 sur ce cylindre preneur 16.

De préférence, la position transversale des racles 20 sur le cylindre preneur 16 est assujettie, par des moyens appropriés non représentés, à la largeur de la bande métallique 1 et/ou à la position transversale de cette bande métallique 1 sur le cylindre de support 3.

En effet, la position de cette bande métallique 1 sur le cylindre de support 3 peut varier.

Les racles 20 sont donc en contact avec le cylindre preneur 16 et enlèvent l'excès de polymère réticulable par frottement sur ledit cylindre 16.

La seconde solution consiste à équiper le cylindre applicateur 17 de moyens d'enlèvement de l'excés de polymère réticulable.

Ainsi que représenté à la Fig. 4, ces moyens d'enlèvement de l'excès de polymère réticulable sur le cylindre applicateur 17 sont formés par un cylindre de récupération 21, de préférence métallique en contact avec le cylindre applicateur 17, et par au moins une racle 22 en contact avec ledit cylindre de récupération 21.

Ainsi, l'excès de polymère réticulable déposé sur le cylindre applicateur 17 est transféré sur le cylindre de récupération 21 du fait de la pression exercée par ledit cylindre de récupération sur la surface déformable dudit cylindre applicateur 17 et cet excès de polymère réticulable est enlevé du cylindre de récupération 21 par la racle 22.

Selon un autre mode de réalisation, les moyens d'enlèvement de l'excès de polymère réticulable sur le cylindre applicateur 17 peuvent être formés par un cylindre de récupération 21 et par deux racles en contact chacune avec un bord latéral dudit cylindre applicateur 17.

Les moyens d'enlèvement de l'excès de polymère réticulable déposé sur le cylindre applicateur 17 ou sur le cylindre preneur 16 évitent d'avoir à ajouter des inserts au niveau de la fente 13 de la filière d'extrusion 12 de façon à calibrer dès sa sortie de la filière 12 la nappe 30 en polymère réticulable et de s'accommoder des variations de largeur et de positionnement transversal de la bande métallique 1 dans les limites de tolérances prédéfinies.

Selon une variante, le point d'application du film 31 de polymère réticulable peut être situé à un autre emplacement qu'en face du cylindre support 3 de la bande métallique 1 et, par exemple, sur un brin libre tendu de cette bande métallique 1 en aval dudit cylindre de support 3.

Selon une autre variante, les deux faces de la bande métallique 1 peuvent être revêtues par un film 31 en polymère réticulable.

Dans ce cas, un dispositif 10 d'application du film 31 est disposé d'un côté de la bande métallique 1 et un autre dispositif 10 d'application du film 31 est disposé de l'autre côté de ladite bande métallique 1.

Par ailleurs, le polymère réticulable peut être pigmenté et chargé par exemple à 40% et plus en poids d'oxyde de titane.

A titre d'exemple, la formulation du mélange de polymère réticulable est réalisée comme suit :
- 85% en poids d'un polyester polyol dénommé URALAC P1460 de la société DSM Resins (Pays Bas) présentant les caractéristiques suivantes :

- Nombre moyen de -OH par molécule ; F_{ol.moy} = 3
- Indice d'hydroxyle du polyol I_{OH} = 37 à 47
- Masse molaire moyenne (en masse) M_{w} = 20000g/mole
- Masse molaire moyenne (en nombre de molécule) Mₙ = 4090
- Indice de polydispersité M_{w}/Mₙ : I_{P} = 4,9
   (L'indice d'hydroxyle du polyol Iₒₕ étant défini comme la quantité nécessaire de potasse - en mg - pour neutraliser toutes les fonctions hydroxyle ; on a donc :
   F_{ol.moy} = I_{OH} x Mₙ/56100)
- comme durcisseur, 15% en masse d'isocyanate bloqué dénommé VESTAGON BF 1540 de la société HÜLS, constitué essentiellement d'urétidione d'IPDI.
- Nombre moyen de -NCO par molécule : F_{iso;moy} = 2
- Température de fusion comprise entre 105°C et 115°C
- Température de déblocage de réticulation = 160°C
- Quantité totale de radicaux NCO = 14,7 à 16% massique
- Proportion radicaux NCO libres (non bloqués) < 1% massique,
- pour une vitesse de cisaillement de 10s⁻¹, on a une viscosité
   . 900 Pa.s à 120°C
   . 400 Pa.s à 130°C
   . 180 Pa.s à 140°C
   . 80 Pa.s à 150°C.

Ce mélange est entièrement à l'état fluide et/ou visqueux à partir d'une température égale à 120°C et sa température de réticulation rapide est comprise entre 170° et 250°C.

Le dispositif de revêtement selon l'invention permet, grâce à l'utilisation d'un élément applicateur de surface déformable, d'obtenir un revêtement en polymère réticulable d'épaisseur uniforme appliqué d'une manière homogène sur une bande métallique présentant une rugosité importante d'amplitude comparable à l'épaisseur du film et cela grâce au contact parfait entre l'élément applicateur et la surface de la bande métallique à revêtir, malgré les défauts de planéité et d'hétérogénéité d'épaisseur de ladite bande métallique.

La vitesse de l'élément applicateur peut être ajustée à un niveau sensiblement supérieur à la vitesse de défilement de la bande métallique de manière à obtenir une parfaite continuité du revêtement et un excellent état de surface de ce revêtement en polymère réticulable transféré sur cette bande métallique.

Le dispositif de revêtement selon l'invention peut également être utilisé pour une bande métallique descendante ou horizontale.

Par ailleurs, le dispositif de revêtement selon l'invention permet de pouvoir revêtir en continu des bandes métalliques de différentes largeurs ou de revêtir simultanément plusieurs bandes métalliques disposées parallèlement les unes aux autres et de s'affranchir par des moyens simples et efficaces des fluctuations de largeur et de positionnement transversal de la ou des bandes métalliques.

Le dispositif de revêtement selon l'invention permet de faciliter l'alimentation régulière et uniforme du revêtement en polymère réticulable en sélectionnant le mode d'alimentation le mieux adapté en fonction du produit à mettre en oeuvre.

L'intérêt de ce large choix est particulièrement important dans le cas de revêtements thermodurcissables hautement réactifs dont l'alimentation ne peut pas s'effectuer à une température élevée proche du domaine de réactivité.

Ce dispositif permet également, dans le cas d'un processus de réticulation par voie chimique, d'élever la température du revêtement en polymère réticulable de manière a réduire sa viscosité et à faciliter son transfert et son étalement sur la bande métallique.

En effet, la température de la matière délivrée par le système d'alimentation situé en amont du cylindre preneur est limitée à une valeur inférieure à celle du début de réticulation pour éviter tout risque d'évolution du produit dans le système d'alimentation.

Du fait de cette limitation de température, il est impossible de réduire la viscosité du produit à un niveau suffisamment bas pour faciliter son transfert et son bon étalement sur la bande métallique. Lors du contact avec les cylindres chauffés, la matière à transférer subit un échauffement très important, mais pendant une durée très faible ce qui permet d'éviter tout risque de réticulation du produit à ce niveau.

Enfin, le dispositif selon l'invention permet de compenser des fluctuations de largeur ou de position transversal de la bande métallique lors de l'application et de s'affranchir des défauts d'uniformité de la bande métallique et de réaliser un revêtement d'épaisseur uniforme en surface sur un substrat métallique non uniforme.

## Revendications

1. Procédé de revêtement en continu d'au moins une bande métallique (1) par un film (31) fluide en polymère réticulable exempt de solvant ou de diluant et d'épaisseur inférieure à celle de la bande métallique (1), procédé dans lequel :
- on fait défiler en continu la bande métallique (1) sur au moins un cylindre de support (3),
- on préchauffe ladite bande métallique (1) à une température sensiblement égale ou supérieure à la température du film (31) fluide en polymère réticulable et à la 'température de ramollissement de ce polymère réticulable,
- on forme par écoulement forcé, sur un cylindre preneur (16) de surface dure, une nappe (30) homogène et d'épaisseur uniforme dudit polymère réticulable possédant une viscosité supérieure à 10 Pa.s dans les conditions de formation de ladite nappe (30), ledit cylindre preneur (16) étant chauffé à une température sensiblement égale ou supérieure à la température de ladite nappe (30) et à la température de ramollissement de ce polymère réticulable et entraîné en rotation dans le même sens que le cylindre de support (3) de la bande métallique (1) et on forme le film (31) en polymère réticulable à une épaisseur uniforme sensiblement égale à l'épaisseur désirée,
- on comprime, entre le cylindre preneur (16) et la bande métallique (1), un élément applicateur (17) de surface déformable, chauffé à une température sensiblement égale ou supérieure à la température du cylindre preneur (16) et entraîné en rotation dans le même sens que le cylindre de support (3) de la bande métallique (1) pour transférer ce film (31), d'une part, du cylindre preneur (16) sur l'élément applicateur (17) et, d'autre part, dudit élément applicateur (17) sur la bande métallique (1) et obtenir un revêtement d'épaisseur homogène.

2. Procédé de revêtement selon la revendication 1, **caractérisé en ce que** l'on revêt le cylindre preneur (16) de ladite nappe (30) formée par extrusion couchage.

3. Procédé de revêtement selon la revendication 1, **caractérisé en ce que** l'on revêt le cylindre preneur (16) de ladite nappe (30) formée par extrusion lamination.

4. Procédé de revêtement selon la revendication 1, **caractérisé en ce que** l'on revêt le cylindre preneur (16) de particules de polymère réticulable déposés sur ledit cylindre preneur (16) par friction sous pression contrôlée d'un bloc rigide en polymère réticulable pour former ladite nappe (30).

5. Procédé de revêtement selon la revendication 1, **caractérisé en ce que** l'on revêt le cylindre preneur (16) d'une poudre en polymère réticulable transférée sous un champ électrostatique pour former ladite nappe (30).

6. Procédé de revêtement selon la revendication 1, **caractérisé en ce que** l'on revêt le cylindre preneur (16) de polymère réticulable fluide projeté sur ledit cylindre preneur (16) pour former ladite nappe (30).

7. Procédé de revêtement selon la revendication 1, **caractérisé en ce que** l'on revêt le cylindre preneur (16) d'une bande continue en polymère réticulable préalablement réalisée pour former ladite nappe (30).

8. Procédé de revêtement selon l'une quelconque des revendications 1 à 7, **caractérisé en ce que** l'on ajuste les températures du cylindre preneur (16) et/ou de l'élément applicateur (17) pour optimiser la viscosité du polymère réticulable au cours du transfert sur le cylindre preneur (16) et sur l'élément applicateur (17).

9. Procédé de revêtement selon l'une quelconque des revendications 1 à 8, **caractérisé en ce que** l'on ajuste les vitesses tangentielles du cylindre preneur (16) et de l'élément applicateur (17) dans un rapport compris entre 0,5 et 2 fois la vitesse de défilement de la bande métallique (1).

10. Procédé de revêtement selon l'une quelconque des revendications 1 à 9, **caractérisé en ce que** l'on forme la nappe (30) et le film (31) en polymère réticulable fluide à une largeur inférieure à la largeur de la bande métallique (1) pour ne revêtir qu'une partie de cette bande métallique (1).

11. Procédé de revêtement selon l'une quelconque des revendications 1 à 9, **caractérisé en ce que** l'on forme la nappe (30) et le film (31) en polymère réticulable fluide à une largeur supérieure à la largeur de la bande métallique (1) pour revêtir la totalité de cette bande métallique (1).

12. Procédé de revêtement selon l'une quelconque des revendications 1 à 9 et 11, **caractérisé en ce que** l'on enlève le polymère réticulable déposé en excès sur le cylindre preneur (16).

13. Procédé de revêtement selon l'une quelconques des revendications 1 à 9 et 11, **caractérisé en ce que** l'on enlève le polymère réticulable déposé en excès sur l'élément applicateur (17).

14. Dispositif de revêtement en continu d'au moins une bande métallique (1) par un film (31) fluide en polymère réticulable exempt de solvant ou de diluant et d'épaisseur inférieure à celle de la bande métallique (1), ledit dispositif comprenant :
- des moyens d'entraînement en continu de la bande métallique (1),
- au moins un cylindre (3) de support de la bande métallique (1),
- des moyens de préchauffage de la bande métallique (1) à une température égale ou supérieure à la température du film (31) fluide en polymère réticulable et à la température de ramollissement de ce polymère réticulable,
- des moyens (12, 13, 15) de formation, sur un cylindre preneur (16) de surface dure, par écoulement forcé d'une nappe (30) homogène et d'épaisseur uniforme dudit polymère réticulable possédant une viscosité supérieure à 10 Pa.s dans les conditions de formation de ladite nappe (30), ledit cylindre preneur (16) formant le film (31) en polymère réticulable à une épaisseur uniforme sensiblement égale à l'épaisseur désirée et étant chauffé à une température sensiblement égale ou supérieure à la température de ladite nappe (30) et à la température de ramollissement de ce polymère réticulable et entraîné en rotation dans le même sens que le cylindre (3) de support de la bande métallique (1),
- et un élément applicateur (17) de surface déformable, comprimé entre le cylindre preneur (16) et la bande métallique (1), chauffé à une température sensiblement égale ou supérieure à la température du cylindre preneur (16) et entraîné en rotation dans le même sens que le cylindre (3) de support de la bande métallique (1) pour transférer ledit film (31), d'une part, du cylindre preneur (16) sur cet élément applicateur (17) et, d'autre part, dudit élément applicateur (17) sur la bande métallique (1) et obtenir un revêtement d'épaisseur homogène.

15. Dispositif de revêtement selon la revendication 14, **caractérisé en ce que** les moyens de formation par écoulement forcé de la nappe (30) comprennent une machine d'extrusion munie d'une filière (12) comportant une fente d'extrusion (13) et un organe de régulation de débit disposé entre la machine d'extrusion (11) et la filière (12).

16. Dispositif de revêtement selon les revendications 14 et 15, **caractérisé en ce que** les moyens de formation par écoulement forcé de la nappe (30) sont formés par la filière (12) en appui contre la surface du cylindre preneur (16) et munie de moyens de réglage de la position des bords de la fente d'extrusion (13) de ladite filière (12) par rapport à ladite surface du cylindre preneur (16).

17. Dispositif de revêtement selon les revendications 14 et 15, **caractérisé en ce que** les moyens de formation par écoulement forcé de la nappe (30) sont formés par la filière (12), des moyens d'étirage de la nappe (30) par ajustement du débit de la filière (12) et/ou de la vitesse de rotation du cylindre preneur (16), des moyens de réglage de la position des bords de la fente d'extrusion (13) de ladite filière (12) par rapport à la surface du cylindre preneur (16) et par des moyens de plaquage de la nappe (30) sur ladite surface du cylindre preneur (16).

18. Dispositif de revêtement selon les revendications 14 et 15, **caractérisé en ce que** les moyens de formation par écoulement forcé de la nappe (30) sont formés par une barre rotative disposée entre la filière (12) et le cylindre preneur (16).

19. Dispositif de revêtement selon la revendication 14, **caractérisé en ce que** les moyens de formation par écoulement forcé de la nappe (30) sont formés par un bloc rigide en polymère réticulable appliqué sous pression contrôlée sur ledit cylindre preneur (16) pour former ladite nappe (30).

20. Dispositif de revêtement selon la revendication 14, **caractérisé en ce que** les moyens de formation par écoulement forcé de la nappe (30) sont formés par un système de transfert sous un champ électrostatique d'une poudre en polymère réticulable sur le cylindre preneur (16) pour former ladite nappe (30).

21. Dispositif de revêtement selon la revendication 14, **caractérisé en ce que** les moyens de formation par écoulement forcé de la nappe (30) sont formés par un système de projection de polymère réticulable fluide sur ledit cylindre preneur (16) pour former ladite nappe (30).

22. Dispositif de revêtement selon la revendication 14, **caractérisé en ce que** les moyens de moyens de formation par écoulement forcé de la nappe (30) sont formés par un système d'application sur le cylindre preneur (16) d'une bande continue en polymère réticulable préalablement réalisée pour former ladite nappe (30).

23. Dispositif de revêtement selon l'une quelconque des revendications 14 à 22, **caractérisé en ce qu'**il comprend des moyens de réglage des températures du cylindre preneur (16) et/ou de l'élément applicateur (17) pour optimiser la viscosité du polymère réticulable au cours du transfert sur le cylindre preneur (16) et sur l'élément applicateur (17).

24. Dispositif de revêtement selon l'une quelconque des revendications 14 à 23, **caractérisé en ce qu'**il comprend des moyens de réglage des vitesses tangentielles du cylindre preneur (16) et de l'élément applicateur (17) dans un rapport compris entre 0,5 et 2 fois la vitesse de défilement de la bande métallique (1).

25. Dispositif de revêtement selon l'une quelconque des revendications 14 à 24, **caractérisé en ce qu'**il comprend des moyens de réglage de la pression de contact entre, d'une part, le cylindre preneur (16) et l'élément applicateur (17) et, d'autre part, l'élément applicateur (17) et la bande métallique (1).

26. Dispositif de revêtement selon l'une quelconque des revendications 14 à 25, **caractérisé en ce que** le cylindre preneur (16) a une surface métallique dure comme par exemple à base d'acier revêtu ou nu.

27. Dispositif de revêtement selon l'une quelconque des revendications 14 à 25, **caractérisé en ce que** le cylindre preneur a une surface dure à base de matériau en céramique.

28. Dispositif de revêtement selon l'une quelconque des revendications 14 à 17 et 23 à 27, **caractérisé en ce que** les moyens de plaquage de la nappe (30) sur le cylindre preneur (16) comprennent une lame d'air dirigée sur le cylindre preneur (16) au niveau de la génératrice de contact de ladite nappe (30) sur ledit cylindre preneur (16).

29. Dispositif de revêtement selon l'une quelconque des revendications 14 à 17 et 23 à 27, **caractérisé en ce que** les moyens de plaquage de la nappe (30) sur le cylindre preneur (16) sont des moyens de plaquage électrostatique.

30. Dispositif de revêtement selon l'une quelconque des revendications 14 à 29, **caractérisé en ce que** la nappe (30) et le film (31) en polymère réticulable fluide ont une largeur inférieure à la largeur de la bande métallique (1) pour revêtir qu'une partie de cette bande métallique (1).

31. Dispositif de revêtement selon l'une quelconque des revendications 14 à 29, **caractérisé en ce que** la nappe (30) et le film (31) en polymère réticulable fluide ont une largeur supérieure à la largeur de la bande métallique (1) pour revêtir la totalité de cette bande métallique (1).

32. Dispositif de revêtement selon l'une quelconque des revendications 14 à 29 et 31, **caractérisé en ce qu'**il comporte des moyens (20) d'enlèvement de l'excès de polymère réticulable déposé sur le cylindre preneur (16).

33. Dispositif de revêtement selon la revendication 32, **caractérisé en ce que** les moyens d'enlèvement sont formés par au moins une racle (20) en contact avec le cylindre preneur (16) en amont de la génératrice d'application de ladite nappe (30) sur ce cylindre preneur (16).

34. Dispositif de revêtement selon l'une quelconque des revendications 14 à 29 et 31, **caractérisé en ce qu'**il comporte des moyens (21, 22) d'enlèvement de l'excès de polymère réticulable déposé sur l'élément applicateur (17).

35. Dispositif de revêtement selon la revendication 34, **caractérisé en ce que** les moyens d'enlèvement sont formés par un cylindre de récupération (21) en contact avec l'élément applicateur (17) et par au moins une racle (22) en contact avec ledit cylindre de récupération (21).

36. Dispositif selon l'une quelconque des revendications 14 à 35, **caractérisé en ce que** l'élément applicateur (17) est formé par un cylindre revêtu d'un matériau déformable.

37. Dispositif de revêtement selon l'une quelconque des revendications 14 à 35, **caractérisé en ce que** l'élément applicateur (17) est formé par une bande sans fin.

38. Dispositif de revêtement selon la revendication 36, **caractérisé en ce que** le matériau déformable est de l'élastomère.

## Patentansprüche

1. Verfahren zum kontinuierlichen Beschichten mindestens eines Metallbandes (1) mit einem fließfähigen Film (31) aus einem vernetzbaren Polymer, welches frei ist von Lösungsmittel oder Verdünnungsmittel, mit einer Dicke, die geringer ist als die des Metallbandes (1), welches Verfahren darin besteht, daß man:
- das Metallband (1) kontinuierlich über mindestens einen Tragzylinder (3) führt,
- das Metallband (1) auf eine Temperatur vorerhitzt, die im wesentlichen gleich oder höher ist als die Temperatur des fließfähigen Films (31) aus dem vernetzbaren Polymer und die Erweichungstemperatur dieses vernetzbaren Polymers,
- durch erzwungenes Ausfließen auf einem Aufnahmezylinder (16) mit harter Oberfläche eine homogene Schicht (30) mit gleichmäßiger Dicke aus dem vernetzbaren Polymer, welches bei den Bedingungen der Bildung der Schicht (30) eine Viskosität von mehr als 10 Pa.s aufweist, bildet, wobei der Aufnahmezylinder (16) auf eine Temperatur erhitzt ist, die im wesentlichen gleich oder höher ist als die Temperatur der Schicht (30) und die Erweichungstemperatur dieses vernetzbaren Polymers, und in gleicher Richtung in Drehung versetzt ist wie der Tragzylinder (3) für das Metallband (1), und man den Film (31) aus dem vernetzbaren Polymer mit einer gleichmäßigen Dicke, die im wesentlichen gleich der gewünschten Dicke ist, bildet,
- man zwischen dem Aufnahmezylinder (16) und dem Metallband (1) ein Auftragselement (17) mit verformbarer Oberfläche, das auf eine Temperatur erhitzt ist, die im wesentlichen gleich oder höher ist als die Temperatur des Aufnahmezylinders (16), und das in gleicher Richtung in Drehung versetzt ist wie der Tragzylinder (3) für das Metallband (1), zusammenpreßt, um diesen Film (31) einerseits von dem Aufnahmezylinder (16) auf das Auftragselement (17) und andererseits von dem Auftragselement (17) auf das Metallband (1) zu übertragen und einen Überzug mit homogener Dicke zu erhalten.

2. Beschichtungsverfahren nach Anspruch 1, **dadurch gekennzeichnet, daß** man den Aufnahmezylinder (16) mit der durch Extrusionsbeschichtung gebildeten Schicht (30) überzieht.

3. Beschichtungsverfahren nach Anspruch 1, **dadurch gekennzeichnet, daß** man den Aufnahmezylinder (16) mit der durch Extrusionslaminierung gebildeten Schicht (30) überzieht.

4. Beschichtungsverfahren nach Anspruch 1, **dadurch gekennzeichnet, daß** man den Aufnahmezylidner (16) mit Teilchen des vernetzbaren Polymers beschichtet, welche durch Reibung eines starren Blocks aus dem vernetzbaren Polymer unter gesteuertem Druck zur Bildung der Schicht (30) auf dem Aufnahmezylinder (16) abgeschieden werden.

5. Beschichtungsverfahren nach Anspruch 1, **dadurch gekennzeichnet, daß** man den Aufnahmezylinder (16) mit einem Pulver aus dem vernetzbaren Polymer beschichtet, welches unter Einwirkung eines elektrostatischen Feldes zur Bildung der Schicht (30) übertragen wird.

6. Beschichtungsverfahren nach Anspruch 1, **dadurch gekennzeichnet, daß** man den Aufnahmezylinder (16) mit einem fließfähigen vernetzbaren Polymer beschichtet, welches unter Bildung der Schicht (30) auf den Aufnahmezylinder (16) aufgespritzt wird.

7. Beschichtungsverfahren nach Anspruch 1, **dadurch gekennzeichnet, daß** man den Aufnahmezylinder (16) mit einem zuvor hergestellten kontinuierlichen Band aus dem vernetzbaren Polymer überzieht, um die Schicht (30) zu bilden.

8. Beschichtungsverfahren nach einem der Ansprüche 1 bis 7, **dadurch gekennzeichnet, daß** man die Temperaturen des Aufnahmezylinders (16) und/oder des Auftragselements (17) zur Optimierung der Viskosität des vernetzbaren Polymers im Verlaufe der Übertragung auf den Aufnahmezylinder (16) und das Auftragselement (17) einstellt.

9. Beschichtungsverfahren nach einem der Ansprüche 1 bis 8, **dadurch gekennzeichnet, daß** man die Tangentialgeschwindigkeiten des Aufnahmezylinders (16) und des Auftragselements (17) in einem Bereich einstellt, der zwischen dem 0,5-fachen und dem 2-fachen der Bewegungsgeschwindigkeit des Metallbandes (1) liegt.

10. Beschichtungsverfahren nach einem der Ansprüche 1 bis 9, **dadurch gekennzeichnet, daß** man die Schicht (30) und den Film (31) aus dem fließfähigen vernetzbaren Polymer mit einer Breite ausbildet, die geringer ist als die Breite des Metallbandes (1), um nur einen Teil dieses Metallbandes (1) zu beschichten.

11. Beschichtungsverfahren nach einem der Ansprüche 1 bis 9, **dadurch gekennzeichnet, daß** man die Schicht (30) und den Film (31) aus dem fließfähigen vernetzbaren Polymer mit einer Breite ausbildet, die größer ist als die Breite des Metallbandes (1), um die Gesamtheit dieses Metallbandes (1) zu beschichten.

12. Beschichtungsverfahren nach einem der Ansprüche 1 bis 9 und 11, **dadurch gekennzeichnet, daß** man das im Überschuß auf den Aufnahmezylinder (16) aufgebrachte vernetzbare Polymer entfernt.

13. Beschichtungsverfahren nach einem der Ansprüche 1 bis 9 und 11, **dadurch gekennzeichnet, daß** man das im Überschuß auf das Auftragselement (17) aufgebrachte vernetzbare Polymer entfernt.

14. Vorrichtung zur kontinuierlichen Beschichtung mindestens eines Metallbandes (1) mit einem fließfähigen Film (31) aus einem vernetzbaren Polymer, welches frei ist von Lösungsmittel oder Verdünnungsmittel, mit einer Dicke, die geringer ist als die des Metallbandes (1), welche Vorrichtung umfaßt:
- Mittel zur kontinuierlichen Bewegung des Metallbandes (1),
- mindestens einen Tragzylinder (3) für das MNetallband (1),
- Mittel zum Vorerhitzen des Metallbandes (1) auf eine Temperatur, die im wesentlichen gleich oder höher ist als die Temperatur des fließfähigen Films (31) aus dem vernetzbaren Polymer und die Erweichungstemperatur dieses vernetzbaren Polymers,
- Einrichtungen (12, 13, 15) zur Bildung durch erzwungenes Ausfließen auf einem Aufnahmezylinder (16) mit harter Oberfläche einer homogenen Schicht (30) mit gleichmäßiger Dicke aus dem vernetzbaren Polymer, welches bei den Bedingungen der Bildung der Schicht eine Viskosität von mehr als 10 Pa.s aufweist, wobei der Aufnahmezylinder (16), der den Film (31) aus dem vernetzbaren Polymer mit einer gleichmäßigen Dicke, die im wesentlichen gleich der gewünschten Dicke ist, bildet und auf eine Temperatur erhitzt ist, die im wesentlichen gleich oder größer ist als die Temperatur der Schicht (30) und die Erweichungstemperatur dieses vernetzbaren Polymers und in gleicher Richtung in Drehung versetzt ist wie der Tragzylinder (2) für das Metallband (1),
- und ein Auftragselement (17) mit verformbarer Oberfläche, welches zwischen dem Aufnahmezylinder (16) und dem Metallband (1) zusammengepreßt wird, welches auf eine Temperatur erhitzt ist, die im wesentlichen gleich oder höher ist als die Temperatur des Aufnahmezylinders (16), und das in gleicher Richtung in Drehung versetzt ist wie der Tragzylinder (3) für das Metallband (1) zur Übertragung des Films (31) einerseits von dem Aufnahmezylinder (16) auf das Auftragselement (17) und andererseits von dem Auftragselement (17) auf das Metallband (1) und zur Bildung eines Überzugs mit homogener Dicke.

15. Beschichtungsvorrichtung nach Anspruch 14, **dadurch gekennzeichnet, daß** die Mittel zur Bildung der Schicht (30) durch erzwungenes Ausfließen eine Extrusionsvorrichtung umfassen, die mit einer Düse (12) versehen ist, die einen Extrusionsschlitz (13) und eine zwischen der Extrusionseinrichtung (11) und der Düse (12) angeordnete Einrichtung zur Steuerung des Durchsatzes aufweist.

16. Beschichtungsvorrichtung nach den Ansprüchen 14 und 15, **dadurch gekennzeichnet, daß** die Mittel zur Bildung der Schicht (30) durch erzwungenes Ausfließen durch die Düse (12) gebildet sind, die gegen die Oberfläche des Aufnahmezylinders (16) gerichtet ist und mit Einrichtungen zur Steuerung der Position der Ränder des Extrusionsschlitzes (13) der Düse (12), bezogen auf die Oberfläche des Aufnahmezylinders (16) versehen ist.

17. Beschichtungsvorrichtung nach den Ansprüchen 14 und 15, **dadurch gekennzeichnet, daß** die Einrichtungen zur Ausbildung der Schicht (30) durch erzwungenes Ausfließen durch die Düse (12), Einrichtungen zum Strecken der Schicht (30) durch Einstellen des Durchsatzes der Düse (12) und/oder der Drehgeschwindigkeit des Aufnahmezylinders (16), Einrichtungen zur Steuerung der Position der Ränder des Extrusionsschlitzes (13) der genannten Düse (12) in bezug auf die Oberfläche des Aufnahmezylinders (16) und Einrichtungen zum Ausbreiten der Schicht (30) auf der Oberfläche des Aufnahmezylinders (16) gebildet sind.

18. Beschichtungsvorrichtung nach den Ansprüchen 14 und 15, **dadurch gekennzeichnet, daß** die Einrichtungen zur Ausbildung der Schicht (30) durch erzwungenes Ausfließen durch einen drehbaren Stab gebildet sind, der zwischen der Düse (12) und dem Aufnahmezylinder (16) angeordnet ist.

19. Beschichtungsvorrichtung nach Anspruch 14, **dadurch gekennzeichnet, daß** die Einrichtungen zur Ausbildung der Schicht (30) durch erzwungendes Ausfließen durch einen starren Block aus vernetzbarem Polymer gebildet sind, der unter gesteuertem Druck auf den Aufnahmezylinder (16) aufgepreßt wird, um die Schicht (30) zu bilden.

20. Beschichtungsvorrichtung nach Anspruch 14, **dadurch gekennzeichnet, daß** die Einrichtungen zur Ausbildung der Schicht (30) durch erzwungenes Ausfließen durch ein System zur Übertragung eines Pulvers aus dem vernetzbaren Polymer unter Einwirkung eines elektrostatischen Films auf den Aufnahmezylinder (16) zur Bildung der genannten Schicht (30) gebildet sind.

21. Beschichtungsvorrichtung nach Anspruch 14, **dadurch gekennzeichnet, daß** die Einrichtungen zur Ausbildung der Schicht (30) durch erzwungenes Ausfließen durch ein System zum Aufsprühen des fließfähigen vernetzbaren Polymers auf den Aufnahmezylinder (16) zur Bildung der Schicht (30) gebildet sind.

22. Beschichtungsvorrichtung nach Anspruch 14, **dadurch gekennzeichnet, daß** die Einrichtungen zur Ausbildung der Schicht (30) durch erzwungenes Ausfließen durch ein System zum Aufbringen eines kontinuierlichen zuvor hergestellten Bandes aus dem vernetzbaren Polymer auf den Aufnahmezylinder (16) unter Bildung der genannten Schicht (30) gebildet sind.

23. Beschichtungsvorrichtung nach einem der Ansprüche 14 bis 22, **dadurch gekennzeichnet, daß** sie Einrichtungen zur Steuerung der Temperaturen des Aufnahmezylinders (16) und/oder des Auftragselements (17) aufweist zur Optimierung der Viskosität des vernetzbaren Polymers im Verlauie der Übertragung auf den Aufnahmezylinder (16) und auf das Auftragselement (17).

24. Beschichtungsvorrichtung nach einem der Ansprüche 14 bis 23, **dadurch gekennzeichnet, daß** sie Einrichtungen zur Steuerung der Tangentialgeschwindigkeiten des Aufnahmezylinders (16) und des Auftragselements (17) in einem Bereich zwischen dem 0,5-fachen und dem 2-fachen der Fördergeschwindigkeit des Metallbandes (1) umfaßt.

25. Beschichtungsvorrichtung nach einem der Ansprüche 14 bis 24, **dadurch gekennzeichnet, daß** sie Einrichtungen zur Steuerung des Kontaktdruckes zwischen dem Aufnahmezylinder (16) und dem Auftragselement (17) einerseits und dem Auftragselement (17) und dem Metallband (1) andererseits umfaßt.

26. Beschichtungsvorrichtung nach einem der Ansprüche 14 bis 25, **dadurch gekennzeichnet, daß** der Aufnahmezylinder (16) eine harte metallische Oberfläche aufweist, beispielsweise auf der Grundlage eines beschichteten oder nicht beschichteten Stahls.

27. Beschichtungsvorrichtung nach einem der Ansprüche 14 bis 25, **dadurch gekennzeichnet, daß** der Aufnahmezylinder eine harte Oberfläche auf der Grundlage eines keramischen Materials aufweist.

28. Beschichtungsvorrichtung nach einem der Ansprüche 14 bis 17 und 23 bis 27, **dadurch gekennzeichnet, daß** die Einrichtungen zur Ausbreitung der Schicht (30) auf dem Aufnahmezylinder (16) eine Luftrakel umfaßt, die auf den Aufnahmezylinder (16) gerichtet ist im Bereich der Kontaktstelle zwischen der Schicht (30) und dem Aufnahmezylinder (16).

29. Beschichtungsvorrichtung nach einem der Ansprüche 14 bis 17 und 23 bis 27, **dadurch gekennzeichnet, daß** die Einrichtungen zur Ausbreitung der Schicht (30) auf dem Aufnahmezylinder (16) Einrichtungen zur elektrostatischen Ausbreitung sind.

30. Beschichtungsvorrichtung nach einem der Ansprüche 14 bis 29, **dadurch gekennzeichnet, daß** die Schicht (30) und der Film (31) aus dem fließfähigen vernetzbaren Polymer eine Breite besitzen, die geringer ist als die Breite des Metallbandes (1) zur Beschichtung nur eines Teils dieses Metallbandes (1).

31. Beschichtungsvorrichtung nach einem der Ansprüche 14 bis 29, **dadurch gekennzeichnet, daß** die Schicht (30) und der Film (31) aus dem fließfähigen vernetzbaren Polymer eine Breite besitzen, die größer ist als die Breite des Metallbandes (1) zur Beschichtung der Gesamtheit dieses Metallbandes (1).

32. Beschichtungsvorrichtung nach einem der Ansprüche 14 bis 29 und 31, **dadurch gekennzeichnet, daß** sie Einrichtungen (20) zur Entfernung des Überschusses des auf den Aufnahmezylinder (16) aufgebrachten vernetzbaren Polymers umfaßt.

33. Beschichtungsvorrichtung nach Anspruch 32, **dadurch gekennzeichnet, daß** die Entfernungseinrichtungen aus mindestens einer Rakel (20) gebildet sind, die in Förderrichtung oberhalb der Auftragstelle der Schicht (30) auf den Aufnahmezylinder (16) angeordnet ist.

34. Beschichtungsvorrichtung nach einem der Ansprüche 14 bis 29 und 31, **dadurch gekennzeichnet, daß** sie Einrichtungen (21, 22) zur Entfernung des Überschusses des auf das Auftragselement (17) abgeschiedenen vernetzbaren Polymers versehen ist.

35. Beschichtungsvorrichtung nach Anspruch 34, **dadurch gekennzeichnet, daß** die Entfernungseinrichtungen durch einen Rückgewinnungszylinder (21), der mit dem Auftragselement (17) in Kontakt steht, und mindestens einer Rakel (22), die mit dem Rückgewinnungszylinder (21) in Kontakt steht, gebildet sind.

36. Vorrichtung nach einem der Ansprüche 14 bis 35, **dadurch gekennzeichnet, daß** das Auftragselement (17) aus einem Zylinder gebildet ist, der mit einem verformbaren Material überzogen ist.

37. Beschichtungsvorrichtung nach einem der Ansprüche 14 bis 35, **dadurch gekennzeichnet, daß** das Auftragselement (17) aus einem Endlosband gebildet ist.

38. Beschichtungsvorrichtung nach Anspruch 36, **dadurch gekennzeichnet, daß** das verformbare Material ein Elastomer ist.

## Claims

1. A method of continuous coating of at least one metal strip (1) with a fluid cross-linkable polymer film (31) free from solvent or diluent and of thickness less than that of the metal strip (1), the method comprising:
- continuously moving the metal strip (1) on at least one support roller (3),
- pre-heating the said metal strip (1) to a temperature substantially equal to or greater than the temperature of the fluid cross-linkable polymer film (31) and the softening temperature of the cross-linkable polymer,
- forming by forced flow, on a receiving roller 16 with a hard surface, a homogeneous sheet (30) of uniform thickness of the cross-linkable polymer having a viscosity greater than 10 Pa.s under the conditions in which the said sheet is formed, the receiving roller (16) being heated to a temperature substantially equal to or greater than the temperature of the said sheet (30) and the softening temperature of the cross-linkable polymer and being driven in rotation in the same direction as the support roller (3) of the metal strip (1), and forming the cross-linkable polymer film (31) to a uniform thickness substantially equal to the desired thickness,
- compressing an applicator element 17 with a deformable surface between the receiving roller (16) and the metal strip (1), the applicator element being heated to a temperature substantially equal to or greater than the temperature of the receiving roller (16) and being driven in rotation in the same direction as the support roller (3) of the metal strip (1) to transfer the film (31) on the one hand from the receiving roller (16) to the applicator element (17) and on the other hand from the said applicator element (17) to the metal strip (1) and to obtain a coating of homogeneous thickness.

2. Coating method according to claim 1, **characterised in that** the receiving roller (16) is coated with the said sheet (30) formed by coating extrusion.

3. Coating method according to claim 1, **characterised in that** the receiving roller (16) is coated with the said sheet (30) formed by lamination extrusion.

4. Coating method according to claim 1, **characterised in that** the receiving roller (16) is coated with particles of cross-linkable polymer deposited on the said receiving roller (16) by friction under controlled pressure from a rigid block of cross-linkable polymer to form the said sheet (30).

5. Coating method according to claim 1, **characterised in that** the receiving roller (16) is coated with a cross-linkable polymer powder transferred under an electrostatic field to form the said sheet (30).

6. Coating method according to claim 1, **characterised in that** the receiving cylinder (16) is coated with fluid cross-linkable polymer projected onto the said receiving cylinder (16) for forming the said sheet (30).

7. Coating method according to claim 1, **characterised in that** the receiving roller (16) is coated with a previously-formed continuous strip of cross-linkable polymer to form the said sheet (30).

8. Coating method according to any one of claims 1 to 7, **characterised in that** the temperatures of the receiving roller (16) and/or the applicator element (17) are adjusted to optimise the viscosity of the cross-linkable polymer as it is transferred onto the receiving roller (16) and into the applicator element (17).

9. Coating method according to any one of claims 1 to 8, **characterised in that** the tangential speeds of the receiving roller (16) and of the applicator element (17) are adjusted in a relationship between 0.5 and 2 times the speed of movement of the metal strip (1).

10. Coating method according to any one of claims 1 to 9, **characterised in that** the sheet (30) and the fluid cross-linkable polymer film (31) are formed to a width less than the width of the metal strip (1), so that only a part of the metal strip (1) is coated.

11. Coating method according to any one of claims 1 to 9, **characterised in that** the sheet (30) and the fluid cross-linkable polymer film (31) has a width greater than the width of the metal strip (1) to coat the whole of the metal strip (1).

12. Coating method according to any one of claims 1 to 9 and 11, **characterised in that** the excess cross-linkable polymer deposited on the receiving roller (16) is removed.

13. Coating method according to any one of claims 1 to 9 and 11, **characterised in that** the excess cross-linkable polymer deposited on the applicator element (17) is removed.

14. Device for continuous coating of at least one metal strip with a fluid cross-linkable polymer film (31) free from solvemt or diluent and of a thickness less than that of the metal strip (1), the device comprising:
- means for continuously driving the metal strip (1),
- at least one support roller (3) for the metal strip (1),
- means for pre-heating the metal strip to a temperature equal to or greater than the temperature of the fluid cross-linkable polymer film (31) and the softening temperature of the cross-linkable polymer,
- means (12, 13, 15) for forming on a receiving roller (16) with a hard surface, by forced flow, a homogeneous sheet (30) of uniform thickness of the said cross-linkable polymer having a viscosity greater than 10 Pa.s under the conditions in which the said sheet (30) is formed, the said receiving roller (16) forming the film (31) of cross-linkable polymer to a uniform thickness substantially equal to the desired thickness and being heated to a temperature substantially equal to or greater than the temperature of the said sheet (30) and the softening temperature of the cross-linkable polymer and being driven in rotation in the same direction as the support roller (3) of the metal strip (1),
- and an applicator element (17) with a deformable surface, compressed between the receiving roller (16) and the metal strip (1), heated to a temperature substantially equal to or greater than the temperature of the receiving roller (126) and driven in rotation in the same direction as the support roller (3) of the metal strip (1) to transfer the said film (31), on the one hand, from the receiving roller (16) onto the applicator element (17) and, on the other hand, from the said applicator element (17) onto the metal strip to obtain a coating of homogeneous thickness.

15. Coating device according to claim 14, **characterised in that** the means for forming the sheet by forced flow comprise an extrusion machine provided with a die (12) having an extrusion slot (13) and an output regulating member located between the extrusion machine (11) and the die (12).

16. Coating device according to claims 14 and 15, **characterised in that** the means for forming the sheet (30) by forced flow comprise the die (12) supported against the surface of the receiving roller (16) and provided with means for regulating the position of the edges of the extrusion slot (13) of the said die (12) in relation to the said surface of the receiving roller (16).

17. Coating device according to claims 14 and 15, **characterised in that** the means for forming the sheet (30) by forced flow comprise the die (12), the means for drawing the sheet (30) by adjusting the output of the die (12) and/or the speed of rotation of the receiving roller (16), the means for regulating the position of the edges of the extrusion slot (13) of the said die in relation to the surface of the receiving roller (16) and by means for directing the sheet (30) onto the said surface of the receiving roller (16).

18. Coating device according to claims 14 and 15, **characterised in that** the means for forming the sheet (30) by forced flow comprise a rotatable bar located between the die (12) and the receiving roller (16).

19. Coating device according to claim 14, **characterised in that** the means for forming the sheet (30) by forced flow comprise a rigid block of cross-Enkable polymer applied under controlled pressure onto the said receiving roller (16) to form the said sheet (30).

20. Coating device according to claim 14, **characterised in that** the means for forming the sheet (30) by forced flow comprise a system of transferring under an electrostatic field a cross-linkable polymer powder onto the receiving roller (16) to form the said sheet (30).

21. Coating device according to claim 14, **characterised in that** the means for forming the sheet by forced flow comprise a system of projecting fluid cross-linkable polymer onto the said receiving roller (16) to form the said sheet (30).

22. Coating device according to claim 14, **characterised in that** the means of the means for forming the sheet (30) by forced flow comprise a system for applying onto the receiving roller (16) a previously-formed continuous strip of cross-linkable polymer to form the said sheet (30).

23. Coating device according to any one of claims 14 to 22, **characterised in that** it comprises means for regulating the temperatures of the receiving roller (16) and/or the applicator element (17) to optimise the viscosity of the cross-linkable polymer as it is transferred onto the receiving roller (16) and onto the applicator element (17).

24. Coating device according to any one of claims 14 to 23, **characterised in that** it comprises means for regulating the tangential speeds of the receiving roller (16) and the applicator element (17) in a relationship comprising between 0.5 and 2 times the speed of movement of the metal strip (1).

25. Coating device according to any one of claims 14 to 24, **characterised in that** it comprises means for regulating the contact pressure between, on the one hand, the receiving roller (16) and the applicator element (17) and, on the other hand, the applicator element (17) and the metal strip (1).

26. Coating device according to any one of claims 14 to 25, **characterised in that** the receiving roller (16) has a hard metal surface, such as for example a base of steel coated or bare.

27. Coating device according to any one of claims 14 to 25, **characterised in that** the receiving roller has a hard surface with a base of ceramic material.

28. Coating device according to any one of claims 14 to 17 and 23 to 27, **characterised in that** the means for directing the sheet (30) onto the receiving roller (16) comprise a jet of air directed towards the receiving roller (16) at the generatrix of contact of the said sheet (30) on the receiving roller (16).

29. Coating device according to any one of claims 14 to 17 and 23 to 27, **characterised in that** the means for directing the sheet (30) onto the receiving roller (16) are electrostatic directing means.

30. Coating device according to any one of claims 14 to 29, **characterised in that** the sheet (30) and the fluid cross-linkable polymer film (31) have a width less than the width of the metal strip so that only a part of the metal strip (1) is coated.

31. Coating device according to any one of claims 14 to 29, **characterised in that** the sheet (30) and the fluid cross-linkable polymer film (31) have a width greater than the width of the metal strip (1) to coat the whole of the metal strip (1).

32. Coating device according to any one of claims 14 to 29 and 31, **characterised in that** it includes means (20) for removing the excess cross-linkable polymer deposited on the receiving roller (16).

33. Coating device according to claim 32, **characterised in that** the removal means are formed by at least one scraper (20) in contact with the receiving roller (16) upstream of the generatrix of application of the said sheet (30) to the receiving roller (16).

34. Coating device according to any one of claims 14 to 29 and 31, **characterised in that** it includes means (21, 22) for removing the excess cross-linkable polymer deposited on the applicator element (17).

35. Coating device according to claim 34, **characterised in that** the removal means are formed by a recovery roller (21) in contact with the applicator element (17) and by at least one scraper (22) in contact with the said recovery roller (21).

36. Device according to any one of claims 14 to 35, **characterised in that** the applicator element (17) is formed by a roller coated with a deformable material.

37. Coating device according to any one of claims 14 to 35, **characterised in that** the applicator element (17) is formed by an endless strip.

38. Coating device according to claim 36, **characterised in that** the deformable material is elastomeric.
